(19) Europäisches Patentamt

European Patent Office

Office européen des brevets

(11) **EP 0 961 152 B1**

(12) **EUROPÄISCHE PATENTSCHRIFT**

(45) Veröffentlichungstag und Bekanntmachung des Hinweises auf die Patenterteilung:
**14.12.2005  Patentblatt 2005/50**

(51) Int Cl.⁷: $G02B\ 27/09$, $B23K\ 26/06$

(21) Anmeldenummer: **99109040.8**

(22) Anmeldetag: **07.05.1999**

(54) **Verfahren und Vorrichtung zur Formung eines kollimierten Lichtstrahls aus den Emissionen mehrerer Lichtquellen**

Method and device for forming a collimated beam of light from the emissions of a plurality of light sources

Procédé et dispositif pour former un faisceau de lumière collimaté à partir des émissions de plusieurs sources de lumière

(84) Benannte Vertragsstaaten:
**CH DE ES FR GB IT LI NL**

(30) Priorität: **25.05.1998  CH 113998**

(43) Veröffentlichungstag der Anmeldung:
**01.12.1999  Patentblatt 1999/48**

(73) Patentinhaber: **FISBA OPTIK AG**
**9016 St. Gallen (CH)**

(72) Erfinder:
• **Langenbach, Eckhard**
**9037 Speicherschwendi (CH)**

• **Forrer, Martin Dr.**
**9000 St. Gallen (CH)**
• **Heimbeck, Hans-Jörg Dr.**
**9435 Heerbrugg (CH)**

(74) Vertreter: **Hepp, Dieter**
**Hepp, Wenger & Ryffel AG,**
**Friedtalweg 5**
**9500 Wil (CH)**

(56) Entgegenhaltungen:
**EP-A- 0 484 276      US-A- 5 168 401**
**US-A- 5 513 201**

**Beschreibung**

Die Erfindung beinhaltet ein Verfahren sowie zur Durchführung dieses Verfahrens notwendige Vorrichtungen zur Formung eines in seiner Abstrahlcharakteristik gleichmässig kollimierten Lichtstrahls.

Das erfindungsgemässe Verfahren sowie zugehörige Vorrichtungen basieren auf bereits bekannten Verfahren zur Strahlformung aus auf einer Reihe angeordneten abstrahlenden Emitier sind zumeist durch die rechteckigen Aperturen von Diodenlasern gegeben, welche für verschiedene Anwendungen zunehmend bisher verwendete inkohärente Lichtquellen verdrängen. So wird das laseraktive Material verschiedener optisch gepumpter Festkörperlaser traditionell durch das Licht von Gasentladungslampen angeregt. Diese Lampen produzieren zum einem selbst eine nicht unerhebliche Wärmemenge, erzeugen andererseits ausserdem Licht über weite spektrale Bereiche, welche zum grössten Teil nicht durch optische Anregung des laseraktiven Materials absorbiert werden, sondern dessen Erwärmung und alle damit zusammenhängenden Probleme verursachen. Die Möglichkeit, mittels Halbleiter-Diodenlasem Laserlicht auf definierten Wellenlängen direkt aus elektrischem Strom zu erzeugen, führt zu effizienteren Festkörperlasern mit höheren optischen Leistungen. Neben der selektiven Erzeugung von optisch anregenden Wellenlängen beinhalten Diodenlaser als Pumplichtquellen auch den Vorteil, das laseraktive Medium so auszuleuchten, dass optische Anregung fast ausschliesslich in den Bereichen des Materials erfolgt, in denen das Laserlicht erzeugt wird. Eine ideale Ausleuchtung eines laseraktiven Mediums geschieht durch die wellenlängenselektive Einkopplung eines Pumplichtstrahls in den optischen Resonator eines Lasers, wobei sich der Pumplichtstrahl innerhalb des Resonators dem Verlauf des Laserlichts anpasst. Folglich sollte der Pumplichtstrahl eine Stahlcharakteristik aufweisen, welche in Ihrer Form derjenigen des aus dem gepumpten Laser emittierten Lichetahts angepasst ist. Diodenlaser emittieren einen, in zwei zueinander senkrecht stehenden Ebenen stark unterschiedlich divergenten Lichtstrahl, der nach einer vollständigen Kollimation in seinen seitlichen Abmessungen ungleichmässig elliptisch ist. Zur Erlangung grösserer Pumplichtleistungen ist es zudem üblich, auf einem Halbleiterkristall eine linear angeordnete Reihe von Diodenlasern zu erzeugen, welche zueinander parallel, jedoch ohne definierte Phasenlage in eine Richtung emittieren. Die Resonatorform dieser Diodenlaser ist diejenige einer durch elektrischen Strom transversal gepumpten P-N-Obergangsebene von rechteckigen Ausmassen (Breite ca. 0.5 mm, Länge ca. 0.5-1 mm, Höhe ca. 0.001 mm). Die in einer Linie angeordneten emitterenden Frontfacetten dieser Fabry-Perot-Diodenlaser sind rechteckige schmale Streifen, die sich mit einem gewissen Abstand an ihren Schmalseiten aneinanderfügen. Alle emittierten Lichtbündel sind somit in der zur linienförmigen Anordnung rechtwinkligen Ebene stark divergent und weisen einen hohen Strahlgütefaktor K auf. Der Strahlgütefaktor K ist nach ISO-Norm definiert als:

$$K = 4\lambda/\theta\pi D,$$

mit

$\lambda$ = Laserwellenlänge,
$\theta$ = Strahldivergenz,
$D$ = Strahltaillendurchmesser.

Ein Lichtbündel mit hohem Strahlgütefaktor K lässt sich daher bei niedriger Divergenz $\theta$ auf einen kleinen Taillendurchmesser D fokussieren. Im Gegensatz hierzu emitteren die Diodenlaser entlang der Linie ihrer aufgereihten emittierenden Flächen mit zwar weitaus geringerer Divergenz, aber erheblich niedrigerem Gübefaktor. Die Fokussierung der Emissionen aller Diodenlaser entlang dieser Ebene bedeutet bei gegebenem Strahltaillendurchmesser D somit eine wesentlich grössere Divergenz 8. Wird durch eine Reihe von Diodenlasern mittels Fokussierung ein laseraktives Medium optisch gepumpt, lasst sich ein Pumplichtstrahl im allgemeinen nur auf einer begrenzten Strecke vollständig mit dem den Resonator füllenden Lasermoden zur Deckung bringen, wodurch sich die Effizienz der gesamten Anordnung stark verringert. Eine verbesserte Pumplichtquelle würde aus Diodenlasern bestehen, deren rechteckige emittierende Flächen mit ihren Längsseiten einander benachbart entlang einer Strecke aufgereiht wären. Hierdurch wäre ein zusammengefügter Lichstrahl in seinen zur Ausbreitungsrichtung seitlichen Dimensionen ausgeglichener und wäre auch in der zu dieser Strecke parallelen Ebene gut fokussierbar. Aufgrund der fehlenden technologischen Machbarkeit einer solchen Anordnung von Diodenlasern wird in existierenden Lösungen das Profil jedes einzelnen aus einem Diodenlaser einer solchen Aufreihung emittierten Lichtstrahls mit einer geeigneten Vorrichtung um die durch seine Ausbreitungsrichtung gegebene Achse gedreht

In der europäischen Patentschrift **0 484 276 B1** wird ein entsprechendes Verfahren nebst Vorrichtung beschrieben. Die Emissionen aller in einer Reihe angeordneten Diodenlaser werden jeweils gemeinsam zunächst in der zur Aufreihungsstrecke orthogonalen Ebene kollimiert, um dann in jeweils einem Abbe-König-Prisma um 90 Grad gedreht zu werden, wobei anschliessend die Kollimation in der zur Aufreihungsstrecke parallelen Ebene erfolgt.

Ein weiterer Ansatz ist aus dem Patent US 5,513,201 zu entnehmen. Dieses US-Patent beschreibt eine Vorrichtung zum Drehen der einzelnen Lichtstrahlen von Halbleiter-Lichtquellen, die in einer Reihe angeordnet sind. Vor dem Drehen werden die Lichtstrahlen kollimiert und nach dem Drehen werden sie kollimiert. Das so erzeugte Strahlenbündel kann durch eine Linse fokussiert werden.

Diese Lösung ist bei heute üblichen Diodenlaser-Reihen anwendbar, in denen etwa 20 Prozent der Aufrelhungstrecke von den Längsseiten der emittierenden Flächen der in der Regel 0.05-0.5 mm breiten Diodenlaser beansprucht werden. Zukünftige Diodenlaser-Reihen werden wesentlich höhere optische Leistungen abstrahlen, wobei der von den Längsseiten der emittierenden Flächen beanspruchte Teil der Aufreihungsstecke grösser ist. Mit zunehmenden Anteil der emittierenden Flächen besteht die Notwendigkeit nach einer in ihrer seitlichen Ausdehnung kompakteren Vorrichtung zur Drehung des von einem einzelnen Diodenlaser emittierten Lichtstrahls. Hierbei ergibt sich das zusätzliche Problem, das glasoptische Strukturen mit weniger als 1 mm Kantenseitenlänge in repetitiven Strukturen nur schwer herzustellen sind.

Aufgabe der nachfolgend beschriebenen Erfindung ist es daher, diesen und weitere Nachteile des Standes der Technik zu vermeiden und die Drehung eines aus einer einzelnen Apertur eines linearen Arrays von Aperturen emittierten Lichtstrahls um einen durch die spezifische Struktur der Abstrahlcharakteristik gegebenen Winkel zu vollziehen, wobei die hierzu verwendete Vorrichtung nur unwesentlich mehr Länge in Richtung der Aufreihungsstrecke benötigen soll als die Apertur selbst. Da sich die Asymmetrie der Abstrahlcharakteristik des Einzelemitters üblicher- aber nicht notwendigerweise an der 90° Symmetrie des Fabry-perot Resonators orientiert, werden im folgenden ohne Einschränkung der Allgemeinheit Lösungen für einen 90° Rotationswinkel präsentiert.

Der grundlegende Erfindungsgedanke besteht in der Drehung des Profils eines Lichtstrahls in einem Prisma bei Minimierung der hierzu erforderlichen Anzahl von Reflexionen, wodurch eine inhärente Verkleinerung der in entsprechenden Vorrichtungen verwendeten Prismen erzielt wird.

Die Realisierung des Erfindungsgedankens geschieht mittels zweier verschiedener Vorrichtungen, in denen der Lichtstrahl des einzelnen Diodenlasers über jeweils zwei schräge Reflexionen um die durch die Ausbreitungsrichtung gegebene Achse gedreht wird. Zunächst werden die aus allen Diodenlasern emittierten Lichtbündel in der zur Aufreihungsstrecke orthogonalen Ebene kollimiert und anschliessend jeweils in einen Polarisationsstrahlteiler geführt, in welchem der einzeine Lichtstrahl um jeweils 90 Grad reflektiert wird. Er breitet sich dann jeweils in Richtung einer dachförming aneinandergefügten Anordnung von reflektierenden ebenen Flächen aus, die gegeneinander sehr genau um einen Winkel von 90 Grad verdreht aneinandergefügt sind. Beide reflektierenden ebenen Flächen treffen sich in einer Linie, die gegenüber dem rechteckförmigen Lichtstrahl des einzelnen Diodenlasers um die durch dessen Ausbreitungsrichtung gegebenen Achse um 45 Grad verdreht ist. Der Lichtstrahl wird durch diese beiden Flächen in seine Gegenrichtung reflektiert und hierbei sowohl in seinem Strahlungsfeld als auch in seiner Polarisation um 90 Grad gedreht. Der auf diese Weise reflektierte und gedrehte Lichtstrahl passiert nun den Polarisationsstrahlteiler, welcher einfallenden und ausfallenden Strahl trennt, um auf einen Spiegel zu treffen und durch diesen in Richtung eines weiteren Kollimators reflektiert zu werden. Sofern die Polarisation des aus den Diodenlasern austretenden Lichts bedingt, dass dieses die Polarisationsstrahlteiler zunächst durchstrahlt, ist die dachförmig aneinandergefügte Anordnung entsprechend zu plazieren. Die aus diesen Anordnungen reflektierten Lichtbündel werden anschliessend in den Polarisationsstrahlteitern um 90 Grad reflektiert.

Eine weitere erfindungsgemässe Methode zur Strahlumformung umgeht die Verwendung eines Polarisationsstrahlteilers und ist damit für beliebig polarisiertes Licht zu verwenden. Die Strahlumformung geschieht mittels zweier schräger Reflexionen des Lichtstrahls des einzelnen Diodenlasers. Nach der ersten Reflexion pflanzt sich der Lichtstrahl des einzelnen Diodenlasers in einem Winkel von 45 Grad zur Aufreihungsstrecke der emittierenden Aperturren parallel zu der die aufgereihten emittierenden Aperturen beinhaltenden Ebene In Richtung eines zweiten Spiegels fort, von welchem der Lichtstrahl in die zur ursprünglichen Ausbreitungsrichtung entgegengesetzten Richtung reflektiert wird. Der nunmehr seitlich versetzte Lichtstrahl bewegt sich ober- oder unterhalb der emittierenden Flache eines benachbarten Diodenlasers mit um 90 Grad gedrehtem Strahlprofil. Jeweils vier reflektierende ebene Flächen sind pyramidenförmig angeordnet und ermöglichen durch seitlichen Austausch die Drehung des Stahlprofils von jeweils zwei benachbarten Diodenlasern. Nachgeordnete reflektierende ebene Flächen bewirken die Ausrichtung der Lichtbündel in die gewünschte Richtung.

In beiden Fällen wird ein Gesamtstrahl der Emissionen aller Diodenlaser erzeugt, welcher aus den mit Ihrer Breitseite aneinandergrenzenden balkenförmigen Strahlprofilen der Emissionen aller Diodenlaser besteht.

Die zwischen den Strahlprofilen der Emissionen der Diodenlaser liegenden Ausleuchtungslücken werden erfindungsgemäss eliminiert, indem der kollimierte Gesamtstrahl auf eine in einer Reihe angeordnete Gruppe gleichartiger Prismen trifft, wobei jedes Prisma einen einzelnen Teilstrahl derartig beugt, dass nach der parallelen Beugung aller Teilstrahlen sich ein lückenloser Gesamtstrahl ergibt.

Eine weitere erfindungsgemässe Anwendung dieser in einer Reihe angeordneten Gruppe gleichartiger Prismen besteht darin, de kollimierten Gesamtstrahlen mehrerer Diodenlaseranays wiederum zu einem lückenlosen Gesamtstrahl zusammenzufügen, um höchste Pumplichtleistungen zu erzielen.

Ein wesenflicher Vorteil des Verfahrens und der daraus abgeleiteten erfindungsgemässen Vorrichtungen besteht in der durch die Reduktion der strahldrehenden Reflexionen bedingten Reduktion der seitlichen Ausdehnung einzelner Teilvorrichtungen, insbesondere unter dem Aspekt, den dadurch möglichen höheren Anteil emittierender Fläche längs der Aufreihungsstrecke der emittierenden Flächen durch Verwendung entsprechender Diodenlaserarrays zur Konstruktion wesentlich leistungsfähigerer Pumpfichtquellen zu nutzen. En weiterer Vorteil besteht in der fertigungstechnisch günstigeren Struktur der aus Teilvorrichtungen zusammengesetzten Gesamtvorrichtung. So kann eine Anordnung von Teilvorrichtungen vermieden werden, in welcher z. B. Abbe-König-Prismen um jeweils 45 Grad gedreht befestigt werden müssen.

Weitere Einzelheiten, Merkmale und Vorteile der Erfindung ergeben sich nicht nur aus den Ansprüchen und diesen zu entnehmenden Merkmalen -für sich und/oder in Kombination, sondern auch aus der nachfolgenden Beschreibung bevorzugter Ausführungsbeispiele.

Es zeigen:

Fig.1 Ein Diodenlaserarray zusammen mit Kollimationslinsen, Strahldrehelement sowie einer Fokussierungslinse, die nicht unter den Wortlaut der unabhängigen Ansprüche fallen

Fig. 2 den Strahlengang in einer der in **Fig. 1** parallel dargestellten Vorrichtungen aus seitlicher Perspektive,

Fig. 3 den Prozess der Strahldrehung in der in **Fig. 2** dargestellten Vorrichtung,

Fig.4 ein erfindungsgemässes Diodenlaserarray zusammen mit Kollimationslinsen, Strahldrehelement sowie einer Fokussierungslinse,

Fig. 5 den Strahlengang in einer der in **Fig. 4** parallel dargestellten Vorrichtungen aus seitlicher Perspektive,

Fig. 6 den Prozess der Strahldrehung in der in **Fig. 5** dargestellten Vorrichtung,

Fig. 7 eine Vorrichtung zur Schliessung von Ausleuchtungslücken im Gesamtstrahl,

Fig. 8 die Vorrichtung nach **Fig. 7** zur Zusammenfügung der Gesamtstrahlen mehrerer Diodenlaser-Arrays.

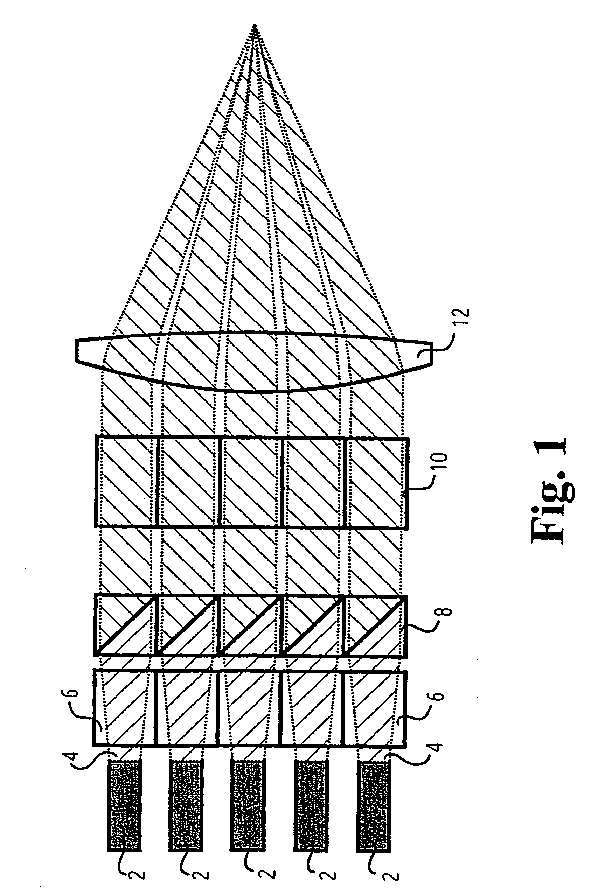

In **Fig. 1** sind mehrere Diodenlaser **2** in der Zeichnungsebene entlang einer Strecke angeordnet, welche rechtseitig aus rechteckigen Aperturen Lichtbündel **4** emittieren, die in der Zeichnungsebene schwächer divergieren als in der hierzu orthogonalen Ebene. Die Lichtbündel **4** werden in einer axialen Kollimationsvorrichtung **6** oder einer entsprechenden Aufreihung einzelner axialer Kollimationsvorrichtungen in der zur Zeichnungsebene orthoganaten Ebene kollimiert, da die Lichtbündel **4** in dieser Richtung sehr stark divergieren. Die nunmehr lediglich in der Zeichnungsebene noch schwach divergenten Lichtbündel **4** durchlaufen anschliessend Strahldrenvorrichtungen **8, in** welchen das Profil der Lichtbündel **4** um 90 Grad gedreht wird.

Die Wirkung der Strahldrehvorrichtungen **8** ist dadurch offensichtlich, dass die Lichtbündel **4** nunmehr in der Zeichnungsebene kollimiert verlaufen, entsprechend der Tatsache, das vertikales und horizontales Profil durch Drehung der Lichtbündel **4** um 90 Grad miteinander vertauscht sind, vor der Strahldrehung alle Lichtbündel **4** aber schon in der vertikalen und nunmehr horizontalen Achse kollimiert worden sind. Anschliessend werden die Lichtbündel **4** in der sich nunmehr senkrecht zur Zeichnungsebene befindlichen schwächer divergenten Richtung mittels einer axialen Kollimationsvorrichtung **10** oder einer entsprechenden Aufreihung von axialen Kollimationsvorrichtungen ebenfalls kollimiert. Anschliessend kann ein aus den Lichtbündeln **4** zusammengefügtes Strahlungsfeld mittels einer Linse **12** oder anderen Mitteln fokussiert werden.

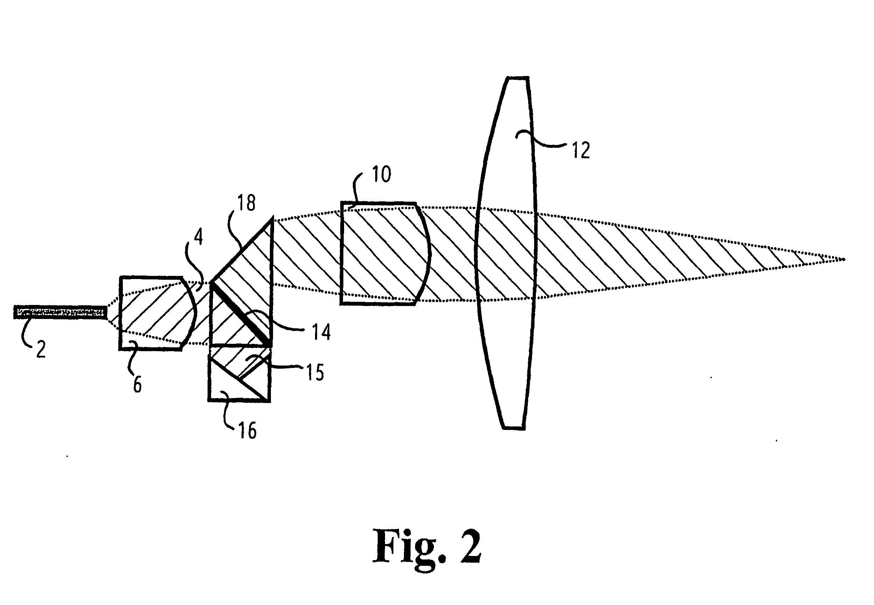

En in **Fig. 2** dargestellter Querschnitt einer Teilvorrichtung der Gesamtvorrichtung nach **Fig. 1** zeigt den entsprechend seiner emittierenden Fläche wesentlich schmaleren Querschnitt durch einen der in **Fig. 1** in Aufsicht gezeigten aufgereihten Diodenlaser **2,** wobei auch die wesentlich höhere Divergenz des Lichtstrahls **4** in der zur Aufsicht vertikalen Ebene ersichtlich ist In der vertikalen Ebene kollimiert, wird der Lichtstrahl **4** innerhalb der Strahldrehvorrichtung nach **Fig. 1** an einer polarisationsselektiv reflektierenden Schicht **14** in Richtung eines Dachkantprismas **16** reflektiert, um in diesem in die entgegengesetzte Richtung reflektiert zu werden. Durch die besondere Struktur des Dachkantprismas **16** erfolgt bei der Reflexion sowohl eine Drehung des Strahlprofils um 90 Grad um seine in Ausbreitungsrichtung zu denkende Achse als auch eine Drehung der Polarisation des Lichts um denselben Winkel. Hierdurch durchstrahlt der Lichtstrahl **4** in Folge die polarisationsselektiv reflektierende Schicht **14**, um an einer reflektierenden Fläche **18** in Richtung der axialen Kollimationsvorrichtung **10** reflektiert zu werden.

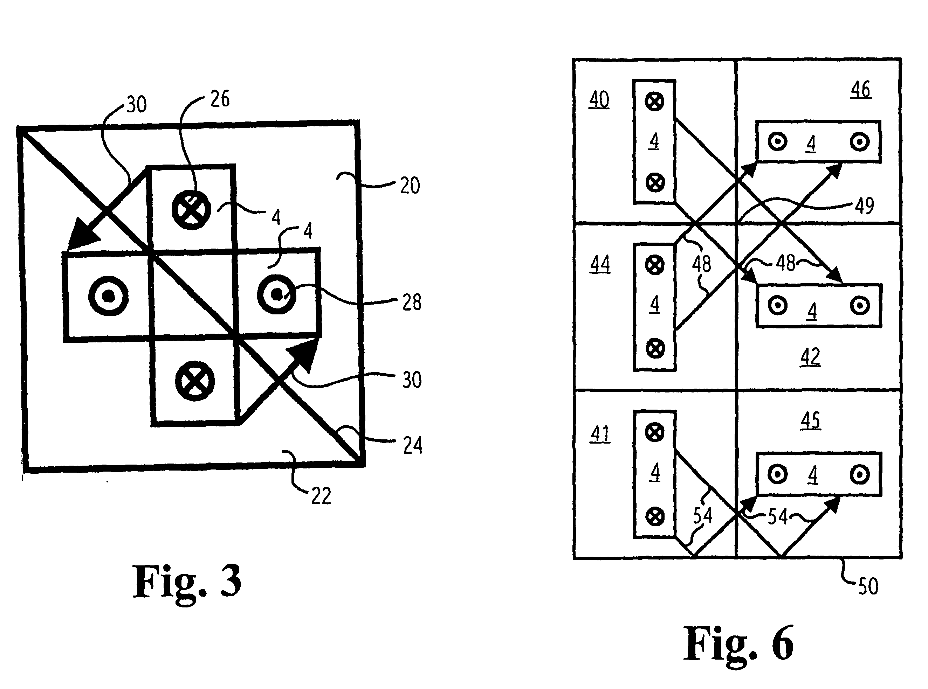

Das Dachkantprisma **16** ist in **Fig. 3** in Aufsicht, d. h. durch die polarisationsselektiv reflektierende Schicht **14** betrachtet dargestellt. Zwei reflektierende ebene Flächen **20** und **22** stehen entlang einer Strecke **24** in einem Winkel von jeweils 45 Grad zur Zeichnungsebene, bilden also gegeneinander an der Strecke **24** einen Winkel von 90 Grad, dessen sehr genaue Einhaltung für die Funktion der Vorrichtung wesentlich ist. Innerhalb des Profils eines Lichtstrahls **4** angebrachte Zeichen **26** symbolisieren dessen Fortpflanzung in Richtung der reflektierenden Ebenen **20** und **22,** an denen zwei aufeinanderfolgende Reflektionen erfolgen, zwischen welchen sich das Licht parallel zur Zeichnungsebene fortpflanzt, wie durch Teilstrahlen **30** des Lichtstrahls **4** angedeutet ist. Der Lichtstrahl **4** bewegt sich nach zweifacher Reflektion mit gedrehtem Strahlprofil von der Vorrichtung weg, wie durch Zeichen **28** verdeutlicht. Sofern die ebenen Flächen **20** sowie **22** derart ausgeführt sind, dass bei einer Reflektion keine Phasenverschiebung zwischen zueinander orthogonalen Komponenten des Lichtfeldes stattfindet, findet gleichzeitig eine Drehung der Polarisation des auf die Vorrichtung fallenden Lichts um 90 Grad statt. Da dies im allgemeinen nicht der Fall ist, werden die ebenen Flächen **20** und **22** mit einer entsprechend wirkenden optischen Beschichtung versehen. Um den technologischen Aufwand zu umgehen, wird in einer weiteren Ausführungsform zwischen der polarisationsselektiv reflektierenden Schicht **14** und der Strahldrehvorrichtung **16** eine Phasenplatte **15** eingefügt, welche aus doppeltbrechendem Material besteht und derart im Strahlengang ausgerichtet ist, dass bei doppeltem Durchgang durch diese Platte die Phasenverschiebung zwischen den sich durch zweifache Reflektion in der Strahldrehvorrichtung **16** ergeben habenden zueinander orthogonalen Komponenten des Lichtfeldes kompensiert werden. Vorzugsweise werden hierbei sehr dünne Schichten, beispielsweise aus Glimmer, verwendet.

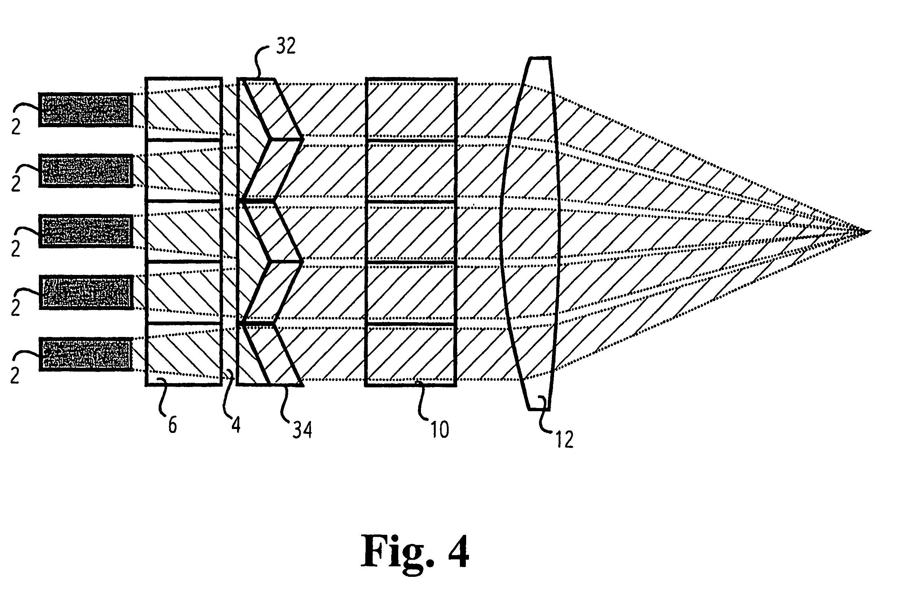

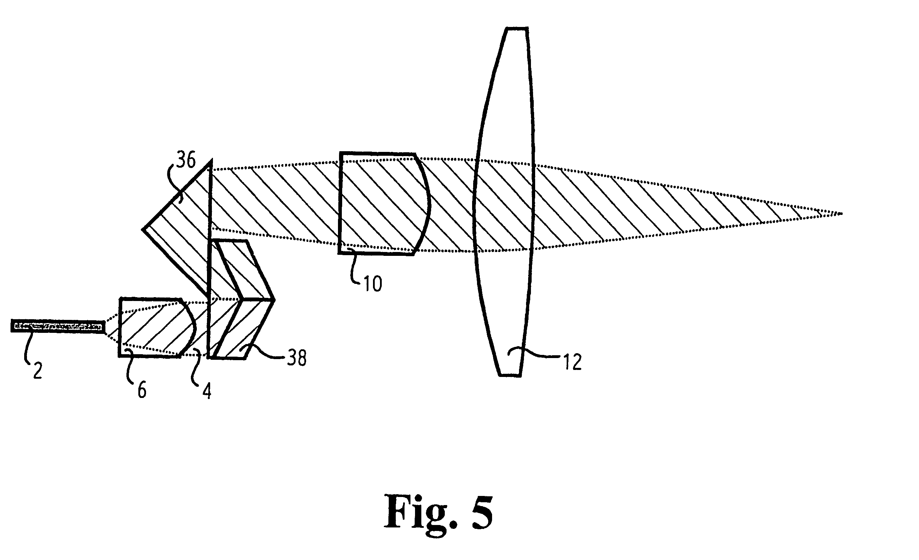

Eine in **Fig. 4** dargesbelite Vorrichtung dient zur Drehung der Teilstrahlen eines aus den Diodenlasern **2** bestehenden Arrays, ohne dass hierbei optische Elemente mit polarisationsselektiv reflektierenden Schichten benötigt werden. Die durch die aus **Fig. 1** und **Fig. 2** bekannten Verfahrensschritte bereits in der Zeichnungsebene kollimierten Lichtbündel **4** gelangen jeweils paarweise in eine Strahldrehvorrichtung **32**, um in Ihrem Profil um 90 Grad gedreht in der Zeichnungsebene von **Fig. 4** mit einem benachbarten Lichtstrahl **4** ausgetauscht zu werden. Da bei einer ungeraden Anzahl von Diodenlasern ein Lichtstrahl **4** nicht mit einem entsprechendem benachbarten Lichtstrahl ausgetauscht werden kann, ist für die Drehung eines einzelnen Lichtstrahls **4** eine Strahldrehvorrichtung **34** vorgesehen, welche aus einer halben Strahldrehvorrichtung **32** besteht, die entlang einer Trennungsebene verspiegelt ist. Eine Teilvorrichtung der in **Fig. 4** dargestellten Gesamtvorrichtung ist in **Fig. 5** in einem Schnitt längs einer zu der Zeichnungsebene von **Fig. 4** senkrechten Ebene dargestellt und beinhaltet neben den aus **Fig. 2** bekannten strahlformenden Komponenten und einem Diodenlaser **2** Teile der Strahldrehvorrichtung **32** bzw. ihrer halbierten Ausführungsform **34.** Ein Dachkantprisma **36** dient lediglich der Umlenkung des Lichtstrahls **4**, während die Strahldrehung durch eine pyramidenförmige Anordnung **38** von reflektierenden Flächen geschieht.

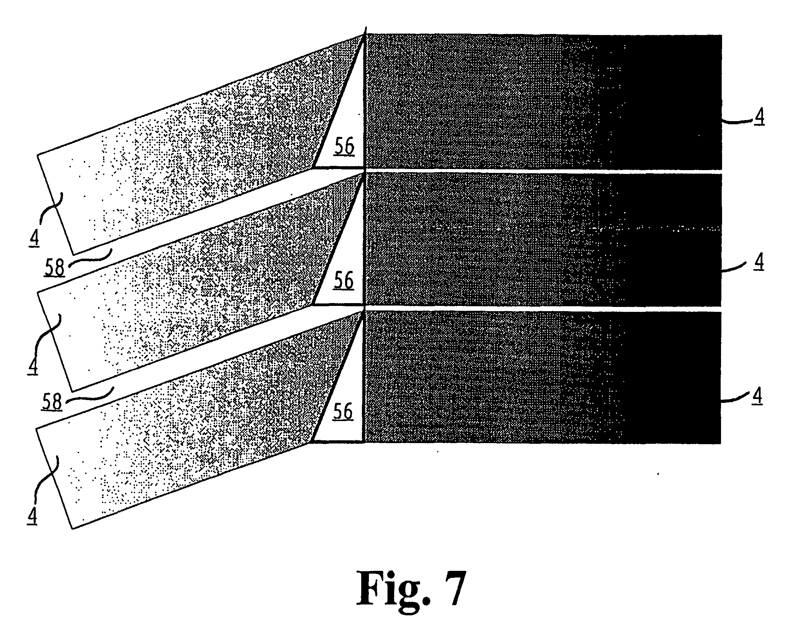

Die pyramidenförmige Anordnung **38** ist in **Fig. 6** mit der Zeichnungsebene in Blickrichtung eines in diese Vorrichtung einlaufenden Lichtstrahls **4** dargestellt. Die Anordnung besteht aus ebenen reflektierenden Flächen **40, 42, 44** sowie **46,** welche gegenüber der Zeichnungsebene entlang ihrer Diagonale gegen einen zentralen Punkt **49** um einen Winkel von genau 45 Grad geneigt sind. Ein aus einem Diodenlaser **2** in die Anordnung **38** einfallender teilweise kollimierter Lichtstrahl **4** wird an der ebenen reflektierenden Fläche **42** schräg in Richtung der reflektierenden Fläche **40** reflektiert, wie durch Teilstrahlen **48** des Lichtstrahls **4** angedeutet. Der Lichtstrahl **4** pflanzt sich nach einer weiteren Reflexion an der Fläche **40** seitlich versetzt mit um 90 Grad gedrehtem Strahlprofil in der zum einfallenden Lichtstrahl **4** entgegengesetzten Richtung fort. In gleicher weise geschieht dies über Kreuz mit einem weiteren benachbarten Liddstrahl **4,** welcher auf die Fläche **46** einfällt und die Anordnung über die Fläche **44** wieder verlässt. Sofern lediglich ein einzelner Lichtstrahl **4** in seinem Strahlprofil gedreht werden soll, wird eine halbierte Strahldrehvorrichtung **34** verwendet, welche eine halbe pyramidenförmige Anordnung **38** beinhaltet, die nach **Fig. 6** aus den reflektierenden ebenen Flächen **41** und **45** sowie einer eine Linie **50** schneidenden, zur Zeichnungsebene orthogonalen reflektierenden Fläche besteht, an welcher der Lichtstrahl **4** zusätzlich reflektiert wird, wie durch Teilstrahlen **54** angedeutet.

Die in **Fig. 1** und **Fig. 4** dargestellten Vorrichtungen erzeugen einen vollständig kollimierten Gesamtstrahl, der anschliessend durch die Unse **12** fokussiert werden kann. Zur Beseitigung der zwischen den von einer Reihe emittierten Lichtbündel 4 vorhandenen unbeleuchteten Lücken ist eine Vorrichtung nach **Fig. 7** vorgesehen, welche in den Vorrichtungen nach **Fig. 1** und **Fig. 4** zwischen den Linsen **10** und **12** einzufügen ist.

Die Vorrichtung nach **Fig. 7** besteht aus einer der Anzahl der Lichtbündel **4** entsprechenden Anzahl gleichartiger Prismen **56**, welche ebenso wie alle verwendeten Strahldrelvorrichtungen und Diodenlaser entlang einer Strecke aufgereit sind. Zwischen den Lichtbündeln **4** eines in die Vorrichtung einfallenden Gesamtrahls bestehende unbeleuchtete Lücken **58** sind nach der Durchstrahlung der Vorrichtung eliminiert. Ein wesentliches Merkmal der Vorrichtung nach **Fig. 7** besteht in der lückenlosen Aneinanderfügung der Prismen **56** entlang einer querzum Gesamtstrahl liegenden strecke. Ein wesentliches Merkmal der verwendeten Prismen **58** besteht darin, dass der in das Prisma **56** einfallende Lichtstrahl **4** eine Ebene des Prismas **56** vollständig beleuchtet, während eine weitere Ebene des Prismas vollständig unbeleuchtet bleibt. Weiterhin verlässt der Lichtstrahl **4** das Prism **56** durch eine Ebene, die von diesem vollständig durchstrahlt wird.

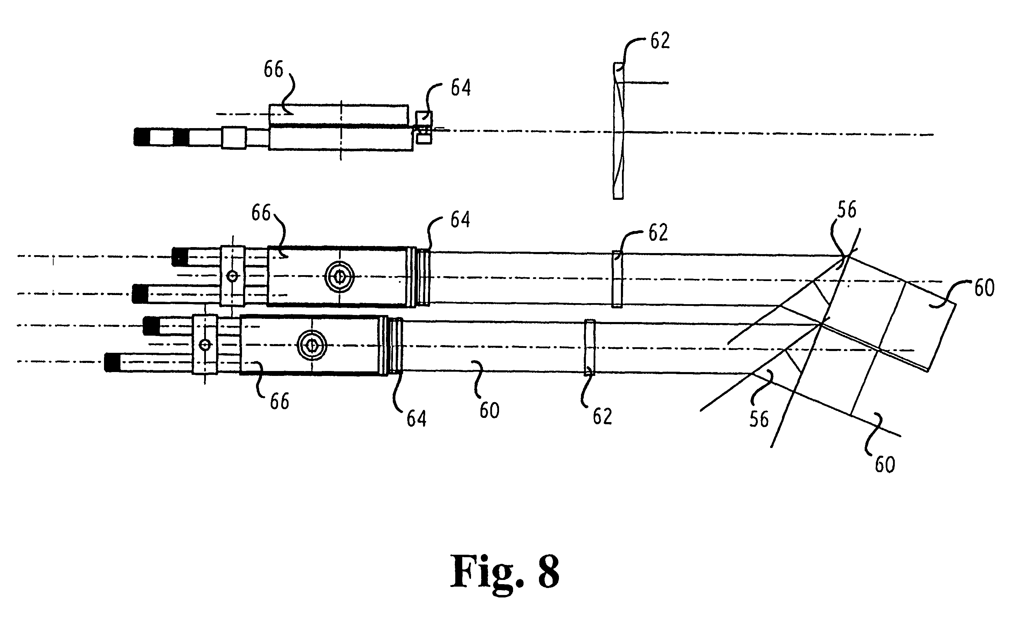

Zur Erzeugung von Gesamtstrahlen höchster Leistung kann nach **Fig. 8** mittels der in **Fig. 7** dargestellten Vorrichtung eine lückenlose Aneinanderfügung von Gesamtsbahnen **60** aus mehreren Diodenlaser-Arrays **66** erfolgen. Das Diodenlaser-Array **66** ist im oberen Teil von **Fig. 8** in einem saggitalen Schnitt zu sehen, welcher ausserdem eine Straldrehvorrichtung **64** nach einem der bereits zuvor beschriebenen Ausführungsbeispiele beinhaltet. In dieser ist auch ein Fast-Axis-Kollimator enthalten, wobei die anschliessende Kollimation des auf einer verbleibenden Achse noch schwach divergenten Strahlenbündels mittels einer zylinderlinse **62** erfolgt.

Im unteren Teil von **Fig. 8** sind zwei Diodenlaser-Arrays **66** in Aufsicht dargestellt, deren Strahlenbündel **60** nach dem Durchlaufen von den Strahldrehvorrichtungen **64** und den Zylinderlinsen **62** auf Prismen **58** treffen, mittels derer ein aus den gebeugten Strahlenbündeln **60** bestehender Gesamtstrahl mit sehr kleinen unbeleuchteten Lücken entsteht.

## Patentansprüche

1. Verfahren zur Formung eines kollimierten Lichtstrahls aus den Emissionen (4) mehrerer Lichtquellen (2), wobei das Strahlprofil der Emission (4) jeder der mehreren Lichtquellen (2) in einer ersten Ebene stärker divergiert als in einer zweiten Ebene, wobei die Flächennormale der ersten Ebene und die Flächennormale der zweiten Ebene zu einer durch die Ausbreitungsrichtung der Emission (4) gegebenen Achse senkrecht zueinander stehen, wobei die Strahlprofile in einer ersten Kollimationsvorrichtung (6) in der ersten Ebene kollimiert werden, in einer aus pyramidenförmigen Körpern (38) mit einer Grundfläche und mit vier reflektierenden Flächen (40, 42, 44, 46), deren Flächennormalen gegenüber der Flächennormale der Grundfläche um 45° geneigt sind bestehenden Strahldrehvorrichtung (32) um die durch die Ausbreitungsrichtung gegebene Achse um 90° gedreht werden und anschliessend mit einer zweiten Kollimationsvorrichtung (10) in einer zweiten Ebene kollimiert werden, **dadurch gekennzeichnet, dass** die in der ersten Ebene kollimierten Lichtbündel jeweils zweier benachbarten Lichtquellen (2) durch die Strahldrehvorrichtung (32) ausgetauscht werden.

2. Verfahren nach Anspruch 1, **dadurch gekennzeichnet, dass** die Emissionen zweier benachbarter Lichtquellen (2) in einer gemeinsamen pyramidenförmigen Strahldrehvorrichtung (32) gedreht und vertauscht werden.

3. Verfahren nach einem der Ansprüche 1 oder 2, **dadurch gekennzeichnet, dass** das Strahlprofil einer einzelnen Emission einer weiteren Lichtquelle (2) in einer zusätzlichen halbierten Strahldrehvorrichtung (32) gedreht wird, welche entlang einer Trennungsebene (50) verspiegelt ist.

4. Verfahren nach einem der Ansprüche 1 bis 3, **dadurch gekennzeichnet, dass** die Emissionen der Lichtquellen (2) durch zusätzliche reflektierende ebene Flächen umgelenkt werden.

5. Verfahren nach einem der vorangehenden Ansprüche, **dadurch gekennzeichnet, dass** die in beiden Ebenen kollimierten. Emissionen der Lichtquellen (2) mittels einer Anzeil der Lichtbündel entsprechenden Anzeil gerhartiger Prismen (56) zu einem lückenlosen Strahlungsfeld zusammengefügt werden.

6. Vorrichtung zur Formung eines kollimierten Lichtstrahls aus den Emissionen (4) mehrerer Lichtquellen (2), wobei das Strahlprofil der Emission (4) jeder der mehreren Lichtquellen (2) in einer ersten Ebene stärker divergiert als in einer zweiten Ebene und wobei die Flächennormale der ersten Ebene und die Flächennormale der zweiten Ebene zu einer durch die Ausbreitungsrichtung der Emission gegebene Achse senkrecht zueinander stehen, wobei die Vorrichtung folgende Elemente umfasst, welche in der genannten Reihenfolge von den Emissionen (4) der Lichtquellen (2) durchlaufen werden:

   eine erste axiale Kollimationsvorrichtung (6), um die Emission (4) in der ersten Ebene zu kollimierten,
   eine Strahldrehvorrichtung (34, 38), um das Strahlprofil um 90° um die durch die Ausbreitungsrichtung gegebene Achse zu drehen, und eine zweite axiale Kollimationsvorrichtung (10), um die Divergenz der Emissionen (4) in der zweiten Ebene zu kollimieren,

   **dadurch gekennzeichnet, dass** die strahldrehvorrichtung (32) aus einem pyramidenförmigen Körper (38) mit einer Grundfläche und mit vier reflektierenden Flächen (40, 42, 44, 46) besteht, deren Flächennormalen gegenüber der Flächennormale der Grundfläche um 45° geneigt ist, wobei in der ersten Ebene kollimierte Lichtbündel jeweils paarweise in der Strahldrehvorrichtung (32) in ihrem Profil um 90° drehbar und mit einem benachbarten Lichtstrahl (4) austauschbar sind.

7. Vorrichtung nach Anspruch 6, **dadurch gekennzeichnet, dass** zusätzlich eine halbierte Strahldrehvorrichtung (34) vorgesehen ist, die Entlang einer Trennungsebene (50) verspiegelt ist.

## Claims

1. Method for forming a collimated light beam from the emissions (4) of several light sources (2), the beam profile of the emission (4) of each of the several light sources (2) diverging more markedly in a first plane than in a second plane, the surface normal of the first plane and surface normal of the second plane relative to an axis defined by the propagation direction of the emission standing at right angles to each other (4), the beam profiles being collimated in a first collimation device (6) in the first plane, being rotated by 90° about the axis defined by the propagation direction in a beam-rotation device (32) consisting of pyramidal bodies (38) with a base surface and with four reflective surfaces (40, 42, 44, 46), the surface normals of which are inclined by 45° vis-à-vis the surface normal of the base surface and then collimated by a second collimation device (10) in a second plane, **characterized in that** the light bundles collimated in the first plane of each of two adjacent light sources (2) are exchanged by the beam-rotation device (32).

2. Method according to claim 1, **characterized in that** the emissions of two adjacent light sources (2) are rotated in a common pyramidal beam-rotation device (32) and exchanged.

3. Method according to one of claims 1 or 2, **characterized in that** the beam profile of a single emission of a further light source (2) is rotated in an additional bisected beam-rotation device (32) which is reflected along a separation plane (50).

4. Method according to one of claims 1 to 3, **characterized in that** the emissions of the light sources (2) are deflected by additional reflective plane surfaces.

5. Method according to one of the previous claims, **characterized in that** the emissions, collimated in both planes, of the light sources (2), are combined to form a continuous radiation field by means of a number of similar prisms (56) corresponding to the number of light bundles.

6. Device for forming a collimated light beam from the emissions (4) of several light sources (2), the beam profile of the emission (4) of each of the several light sources (2) diverging more markedly in a first plane than in a second plane, the surface normal of the first plane and surface normal of the second plane relative to an axis defined by the propagation direction of the emission standing at right angles to each other,

the device comprising the following elements through which the emissions (4) of the light sources (2) pass in the named sequence:

a first axial collimation device (6) for collimating the emission (4) in the first plane,
a beam-rotation device (34, 38) for rotating the beam profile by 90° about the axis defined by the propagation direction,
a second axial collimation device (10) for collimating the divergence of the emissions (4) in the second plane,

**characterized in that** the beam-rotation device (32) consists of a pyramidal body (38) with a base surface and with four reflective surfaces (40, 42, 44, 46), the surface normals of which are inclined by 45° vis-à-vis the surface normals of the base surface, each of the light bundles collimated in the first plane being rotatable in pairs in its profile by 90° in the beam-rotation device (32) and exchangeable with an adjacent light beam (4).

7. Device according to claim 6, **characterized in that** in addition a bisected beam-rotation device (34) is provided which is reflected along a separation plane (50).

## Revendications

1. Procédé pour former un faisceau lumineux collimaté à partir des émissions (4) de plusieurs sources lumineuses (2), le profil de faisceau de l'émission (4) de chacune des sources lumineuses (2) divergeant davantage dans un premier plan que dans un second plan,
la normale de surface du premier plan et la normale de surface du second plan par rapport à un axe défini par le sens de propagation de l'émission (4) étant perpendiculaires l'une par rapport à l'autre,
les profils de faisceaux étant collimatés dans un premier dispositif de collimation (6) dans le premier plan, tournés de 90° autour de l'axe défini par l'axe de propagation, dans un dispositif de rotation de faisceau (32) qui est composé de corps pyramidaux (38) avec une surface de base et quatre surfaces réfléchissantes (40, 42, 44, 46) dont les normales sont inclinées de 45° par rapport à la normale à ladite surface de base, puis collimatés à l'aide d'un second dispositif de collimation (10) dans un second plan,
**caractérisé en ce que** les faisceaux lumineux de deux sources lumineuses (2) voisines qui sont collimatés dans le premier plan sont échangés grâce au dispositif de rotation de faisceau (32).

2. Procédé selon la revendication 1, **caractérisé en ce que** les émissions de deux sources lumineuses (2) voisines sont tournées et échangées dans un dispositif de rotation pyramidal commun (32).

3. Procédé selon la revendication 1 ou 2, **caractérisé en ce que** le profil de faisceau d'une émission individuelle d'une autre source lumineuse (2) est tourné par un dispositif de rotation de faisceau dédoublé supplémentaire (32) qui est garnie d'une couche réfléchissante, le long d'un plan de séparation (50).

4. Procédé selon l'une des revendications 1 à 3, **caractérisé en ce que** les émissions des sources lumineuses (2) sont déviées par des surfaces planes réfléchissantes supplémentaires.

**5.** Procédé selon l'une des revendications précédentes,

**caractérisé en ce que** les émissions des sources lumineuses (2) qui sont collimatées dans les deux plans sont assemblées pour former un champ de rayonnement ininterrompu à l'aide d'un nombre de prismes similaires (56) correspondant au nombre de faisceaux lumineux.

**6.** Dispositif pour former un faisceau lumineux collimaté à partir des émissions (4) de plusieurs sources lumineuses (2), le profil de faisceau de l'émission (4) de chacune des sources lumineuses (2) divergeant davantage dans un premier plan que dans un second plan, et la normale de surface du premier plan et la normale de surface du second plan par rapport à un axe défini par le sens de propagation de l'émission étant perpendiculaires l'une par rapport à l'autre,

le dispositif comprenant les éléments suivants, qui doivent être traversés par les émissions (4) des sources lumineuses (2) dans l'ordre indiqué :

un premier dispositif de collimation axial (6) pour collimater l'émission (4) dans le premier plan,

un dispositif de rotation de faisceau (34, 38) pour tourner le profil de faisceau de 90° autour de l'axe défini par le sens de propagation,

et un second dispositif de collimation axial (10) pour collimater la divergence des émissions (4) dans le second plan,

**caractérisé en ce que** le dispositif de rotation de faisceau (32) se compose d'un corps pyramidal (38) avec une surface de base et quatre surfaces réfléchissantes (40, 42, 44, 46) dont les normales sont inclinées de 45° par rapport à la normale à la surface de base, les faisceaux lumineux collimatés dans le premier plan pouvant être tournés avec leur profil de 90°, par paires, dans le dispositif de rotation de faisceau (32) et être échangés avec un faisceau lumineux (4) voisin.

**7.** Dispositif selon la revendication 6, **caractérisé en ce qu'**il est prévu en supplément un dispositif de rotation de faisceau (34) dédoublé qui est garnie d'une couche réfléchissante, le long d'un plan de séparation (50).

**Fig. 1**

**Fig. 2**

EP 0 961 152 B1

**Fig. 3**

**Fig. 6**

EP 0 961 152 B1

**Fig. 4**

Fig. 5

EP 0 961 152 B1

**Fig. 7**

**Fig. 8**